# EUROPEAN PATENT SPECIFICATION

(11) **EP 1 803 545 B1**
(45) Date of publication and mention of the grant of the patent: **10.08.2011**
(21) Application number: 06026803.4
(22) Date of filing: 22.12.2006
(51) Int. Cl.: B29D 30/30, B29D 30/72

(54) **Manufacturing method of rubber members for tires**
Verfahren zur Herstellung von Gummibestandteilen für Luftreifen
Procédé de fabrication d'éléments en caoutchouc pour pneumatiques

(30) Priority: 28.12.2005 JP 2005379516
(43) Date of publication of application: 04.07.2007
(73) Proprietor: SUMITOMO RUBBER INDUSTRIES, LTD., Hyogo-ken (JP)
(72) Inventor: Miki, Youjirou c/o Sumitomo Rubber Industries,Ltd., Kobe-shi Hyogo-ken (JP); Yamamori, Syuichi Sumitomo Rubber Industries, Ltd., Kobe-shi Hyogo-ken (JP)
(74) Representative: Manitz, Finsterwald & Partner GbR

(56) References cited:
- EP-A- 0 970 797
- EP-A- 1 033 218
- EP-A- 1 201 414
- US-A- 4 147 577

## Description

The present invention relates to a strip wind construction method of forming a rubber member for a tire by spirally winding a rubber strip, and more particularly to a manufacturing method of a rubber member for a tire, which can reduce an air remnant in the rubber member.

There has been considered to form a rubber member in each of positions of tire, such as a tread rubber, a sidewall rubber or the like by spirally winding a rubber strip made of a material corresponding to a demand characteristic of the rubber member. By the strip wind construction method, a mouth piece of a nozzle and a labor hour of a management can be reduced in comparison with an conventional extrusion molding method of continuously extruding from a mouth piece in a predetermined finish cross sectional shape. Further, it is possible to use a compact rubber extruding machine, and it is possible to achieve a large item small scale production. As mentioned above, the strip wind construction method (STW method) can improve productivity.

However, in the STW method mentioned above, since the rubber strip is spirally wound, an air reservoir tends to be generated due to a step in a side edge of the rubber strip or the like. This is because the adjacent rubber strips are wound astride the step in the side edge of the previously wound rubber strip. There is an increased risk that the air reservoir is generated between a wound body such as a drum or the like, and a rubber layer spirally wound in an outer side in a radial direction thereof, or between the inner and outer rubber layers in the radial direction in comparison with the conventional one mouth method. Accordingly, Japanese Published patent application 2000-254980 proposes a rubber strip provided with thin lug portions in both side edges, in a rubber strip.

In the proposed structure mentioned above, since both the side edges are provided with the thin step, in the case of forming a diagonal side edge portion, a thickness of an edge step is reduced in comparison with a thickness of a base portion. And an error in an outer peripheral edge between a finish cross sectional shape and an outline shape is reduced. Further, it is possible to achieve an effect to reduce a winding number by the thick base portion. However, it becomes necessary to hold specialized mouth pieces for the extruding machine, and productivity tends to be lowered.

The closest prior art is found in EP 0 970797 A2, and technological background can be found in US 4147577-A, EP 1201414-A and EP 1033218-A.

An object of the present invention is to provide a manufacturing method of a rubber member for a tire, which can reduce an air reservoir even in the case of using a rubber strip having a rectangular cross section in an STW method.

In accordance with the present invention, there is provided a manufacturing method of a rubber member for a tire in accordance with claim 1.

Particular embodiments of the invention are defined in the dependent claims.

Further, in the rubber member, the structure can be made such that materials of the first rubber strip and the second rubber strip are differentiated, the first rubber layer forms a e.g. base rubber layer of a tread rubber, and the second rubber layer forms e.g. a cap rubber layer thereof. The structure can be made such that at least thicknesses are set identical between the first rubber strip and the second rubber strip, and the first rubber strip and the second rubber strip may be wound at the same pitch in an axial winding direction, and with aligned side surfaces.

Accordingly, the present invention is structured such that spiral directions of the steps generated by the spiral winding are aligned between the inner and outer sides, by setting the torsional direction of the spiral and the axial winding direction identical, and the steps are coincided with each other between the first and second rubber layers. At this time, it is possible to reduce a dead space so as to make them close to each other, and it is possible to suppress the air reservoir.

Further, the structure is made such that the first rubber strip and the second rubber strip are formed as a wide composite rubber strip in which side edges of the strips are bonded to each other side by side, prior to the winding.
Fig. 1 is a cross sectional view of a tire showing an example of an embodiment in accordance with the present invention;
Fig. 2 is a cross sectional view exemplifying a rubber member in a state in which first and second rubber layers are overlapped;
Fig. 3 is a cross sectional view exemplifying a state before the second rubber layer is wound around the first rubber layer;
Fig. 4 is a cross sectional view exemplifying a rubber layer in the case of a right torsion rr, and a left axis winding direction dl;
Fig. 5 is a cross sectional view exemplifying a rubber layer in the case of a left torsion rl, and the left axis winding direction dl;
Fig. 6 is a cross sectional view exemplifying a rubber layer in the case of the right torsion rr, and a right axis winding direction dr;
Fig. 7 is a cross sectional view exemplifying a rubber layer in the case of the left torsion rl, and the right axis winding direction dr;
Fig. 8 is a cross sectional view exemplifying a wide rubber strip in which rubber strips are connected in parallel side by side;
Fig. 9 is a cross sectional view showing an example of a conventional winding state of a rubber layer; and
Fig. 10 is a cross sectional view exemplifying an attached state of a sidewall rubber.

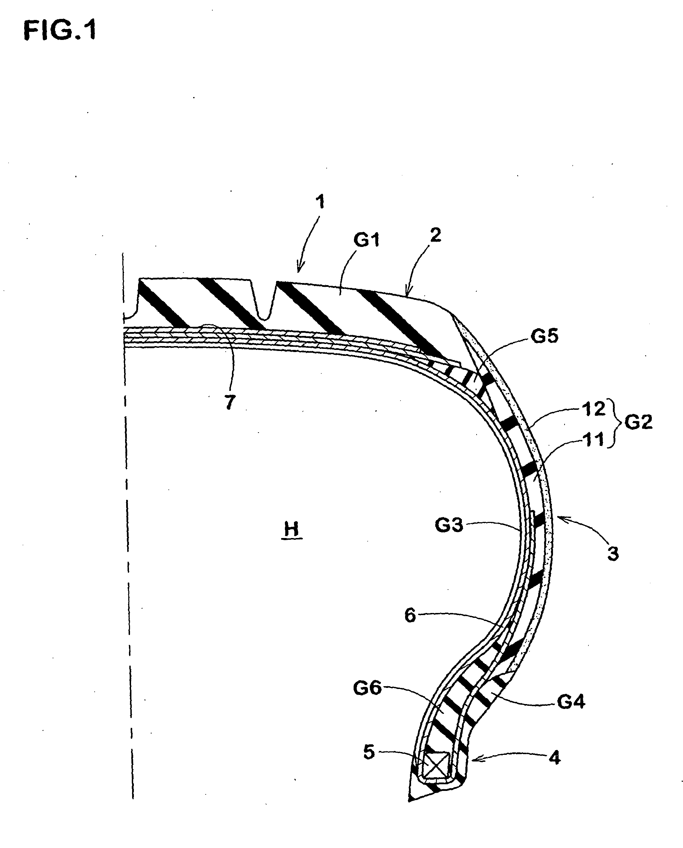

A description will be given of an embodiment in accordance with the present invention with reference to the accompanying drawings. Fig. 1 exemplifies a case that a pneumatic tire is constituted by a radial tire for a passenger car. A tire 1 includes plural kinds of tire rubber members G having different rubber compositions. As the rubber member, for example, there can be included a tread rubber G1 arranged in a tread portion 2 and forming a ground plane, a sidewall rubber G2 arranged in the sidewall portion 3 and forming a tire outer surface, an inner liner rubber G3 arranged in an inner side of a carcass 6 and surrounding a tire inner cavity H, a clinch rubber G4 arranged in a bead portion 4 and preventing a rim displacement, and a breaker cushion rubber G5 arranged in both ends of a belt layer 7 and protecting an outer end of the belt layer 7. It is possible to include a bead apex rubber G6 extending to an outer side in a radial direction from a bead core 5 of the bead portion 4. The present invention can be preferably adapted to a case that the rubber member G, such as the sidewall rubber G2, and the inner liner rubber G3 which have a uniform thickness portion having an approximately uniform thickness.

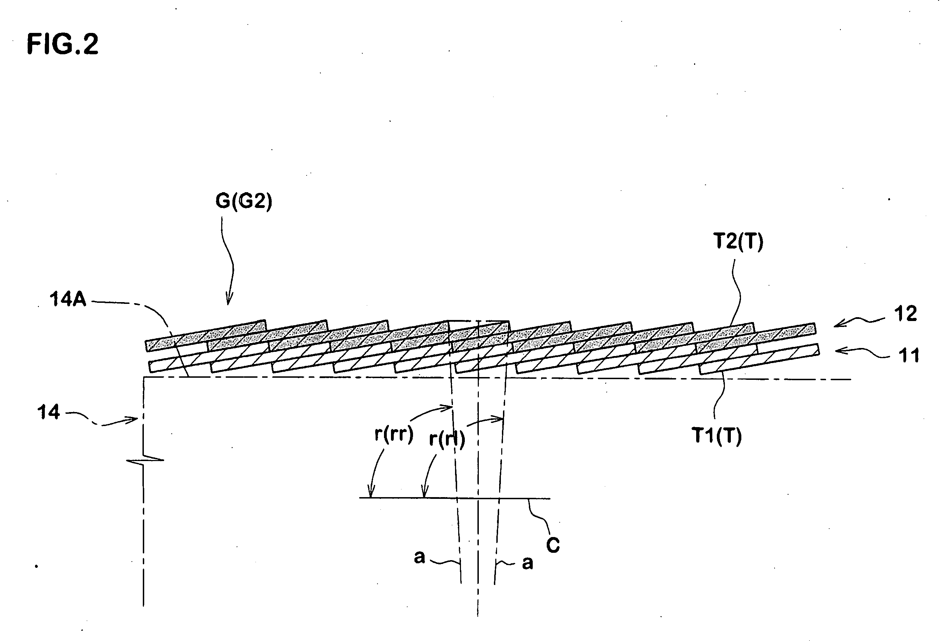

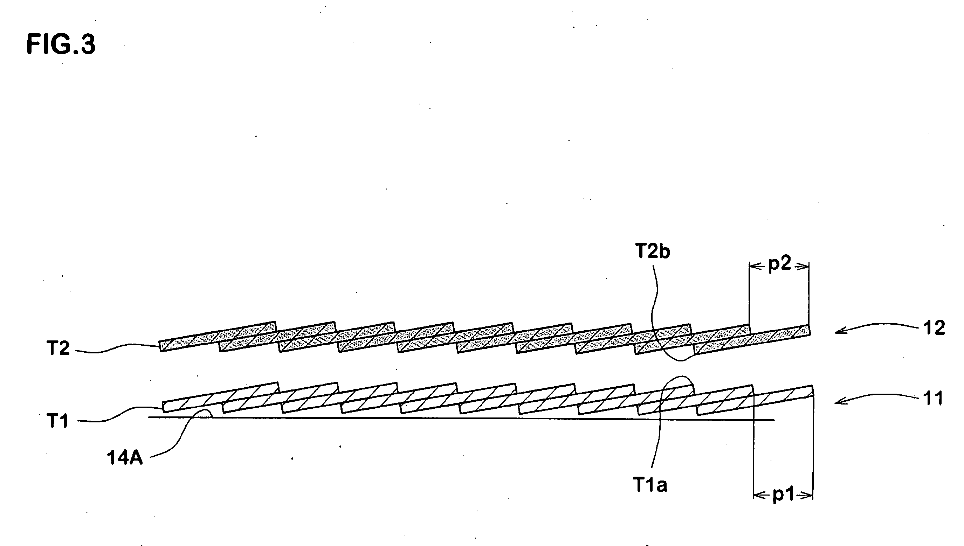

Figs. 2 and 3 show a case that the rubber member G is constituted as the sidewall rubber G2.

The sidewall rubber G2 comprises a first rubber layer 11 and a second rubber layer 12, and is wound around an outer peripheral surface 14A of a former 14. The first rubber layer 11 is formed by spirally winding a first rubber strip T1 in an inner side in a radial direction, and the second rubber layer 12 is formed by spirally winding a second rubber strip T2 (rubber strip T1, T2 may be generically called as a rubber strip T) in an outer side thereof.

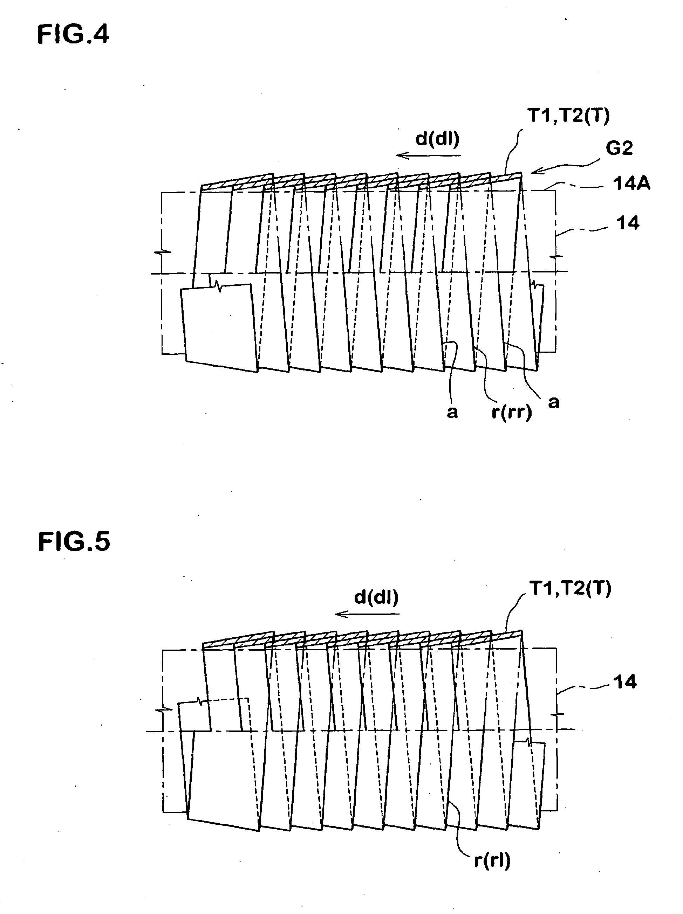

In this case, a torsional direction r of the spiral and an axial winding direction d, as shown in Figs. 4 and 5, are set to be identical. The torsional direction r of the spiral means, as shown in Fig. 4 - 7 (in which an upper half is shown by a cross sectional view, and a lower half is shown by a plan view), a torsional direction which a step line a generated by the spiral winding of the rubber strip T forms around a center line C thereof, in the plan view in which the center line C is arranged horizontally. For example, in Fig. 4, when the step line a appearing in the plan view slopes up to the left, the torsional direction r of the spiral twists in accordance with a rightward torsion rr. As shown in Fig. 5, sloping up to the right is called as a left torsion rl.

Further, the axial winding direction d is called as a right axial winding direction dr in the case that the rubber strip T is spirally wound in a right direction in the drawing with respect to an axial direction of a former 14 around which the rubber strip T is wound, and is called as a left axial winding direction dl in the case that it is in a left direction. Both of Figs. 4 and 5 correspond to the left axial winding direction dl.

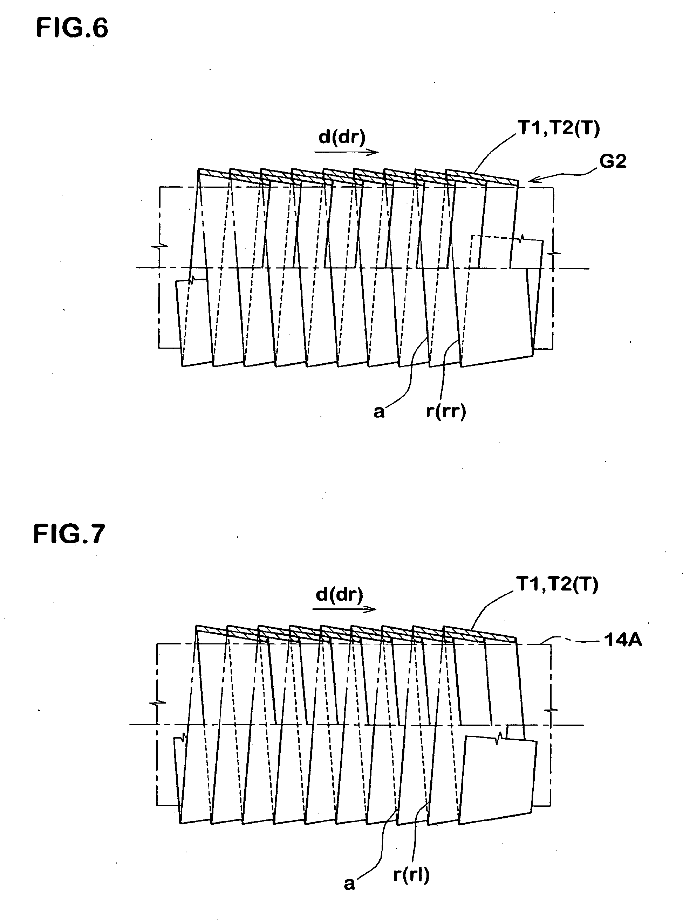

In other words, Fig. 4 shows a case of the rightward torsion rr and the left axial winding direction dl, and Fig. 5 shows a case of the leftward torsion rl and the left axial winding direction dl. In the same manner, Fig. 6 shows a case of the rightward torsion rr and the right axial winding direction dr, and Fig. 7 shows a case of the leftward torsion rl, and the right axial winding direction dr. In this case, Figs. 4 to 7 shows a diameter of an outer peripheral surface 14A of the former 14 as being abnormally small.

As mentioned above, the torsional directions r and the axial winding directions d of the first and second rubber strips T1 and T2 of the first and second rubber layers 11 and 12 are made identical. Accordingly, it is possible to align the step lines of the both, and it is possible to extrude and discharge the air. Further, it is preferable to set axial winding pitches p1 and p2 of the first and second rubber strips T to be identical. Further, it is preferable to make thicknesses of the first rubber strip T1 and the second rubber strip T2 identical, in the case of being brought into contact by the step line a.

Further, in Fig. 3, at a time of winding the second rubber layer 12, the pitch p2 is made equal to pitch p1, and an upper side edge T1a of the first rubber strip T1 of the wound first rubber layer 11 is aligned with a lower side edge T2b of the second rubber strip T2 in side surfaces. Accordingly, it is preferably possible to suppress an air reservoir generated between the side surfaces of the rubber strips T. In this case, the upper side edge T1a means a side edge forming an upper side due to a slope at a time of winding the rubber strip T1, and the side edge has a side surface. The lower side edge T2b means a side edge forming a lower side due to the slope.

There is included a case that an outward surface in a radial direction of the first rubber strip T1 and an inward surface of the second rubber strip T2 are brought into contact with each other in a state of overlapping in a radial direction. Accordingly it is possible to suppress the air reservoir in conjunction with prevention of the air remnant between the side surfaces.

In the case of manufacturing the rubber member G having the comparatively uniform thickness such as the present embodiment, it is possible to uniformly press the rubber member G to the former by using a comparatively long roller for a pressure forcing. Accordingly, it is possible to make the extrusion of the air easy and it is possible to suppress the generation of the air reservoir.

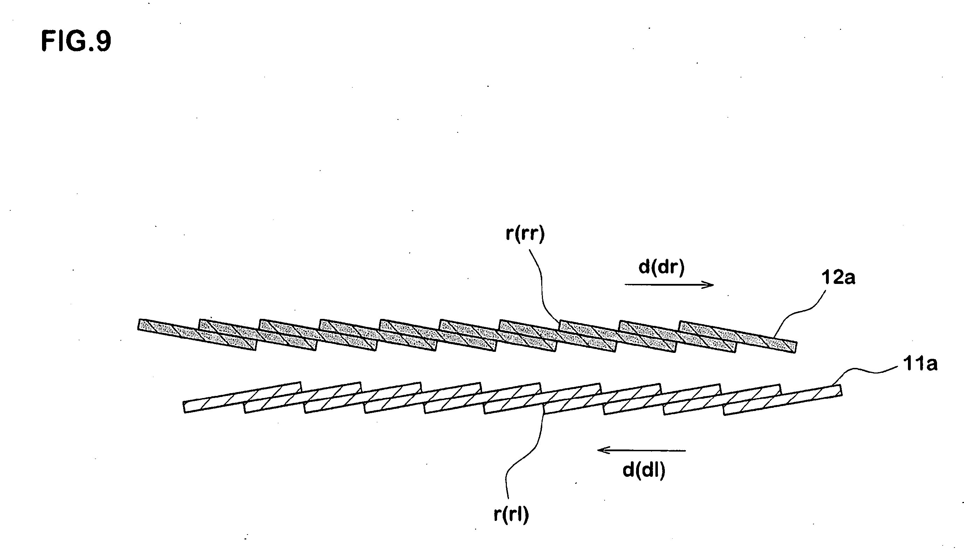

In comparison with this, as shown in Fig. 9, in the case that the torsional direction r of the spiral or the axial winding direction d is different between the first and second rubber layers 11a and 12a, the step line a of the outer peripheral surface of the first rubber layer 11 intersects the step line a in the inner peripheral surface of the second rubber layer 12, and it is impossible to align the directions thereof. As a result, there is considered an inferior effect of preventing the air reservoir near the side surface of the rubber strip T.

Further, in the case of Fig. 9, the direction of the axial winding direction d is set to the left axial winding direction dl in the first rubber layer 11a, and is set to the right axial winding direction dr in the second rubber layer 12a. Further, the torsional direction r is set to the leftward torsion rl in the first rubber layer 11a, and is set to the rightward torsion rr in the second rubber layer 12a. In the case, it reduces the opportunity in which the outward surface in the radial direction of the first rubber strip T1 and the inward surface of the second rubber strip T2 are brought into contact with each other in the state of overlapping in the radial direction, between the first and second rubber layers 11a and 12a. Therefore, it is supposed that the function of preventing the air reservoir between the side surfaces, and suppressing the air reservoir is inferior.

On the other hand, in the case of the present embodiment exemplified by the sidewall rubber G2, a normal sidewall rubber material is used as the inside first rubber layer 11, and a rubber having an excellent crack resistance is used as the outside second rubber layer 12 in an outside air side. As the first rubber strip T1, there is employed a rubber composition in which JISA hardness is not less than 65 and not more than 75, a complex elastic modulus (E*) is not less than 74 kgf/cm² and not more than 90 kgf/cm², and a tangent of the loss angle (tan δ) is not less than 0.25 and not more than 0.35. As the second rubber strip T2, there is employed a rubber composition in which the JISA hardness is not less than 55 and not more than 65, the complex elastic modulus (E*) is not less than 55 kgf/cm² and not more than 60 kgf/cm², and the tangent of the loss angle (tan δ) is not less than 0.20 and not more than 0.25. For example, it is possible to utilize various sidewall rubbers structured such that a carbon is blended to a diene rubber such as a natural rubber, an isoprene rubber, a styrene-butadiene rubber or the like. As mentioned above, it is possible to form the rubber member G made of the rubber corresponding to the nature by employing the different material rubbers for the first and second rubber strips T1 and T2. In this case, the complex elastic modulus (E*) and the tangent of the loss angle (tan δ) are the values obtained by measuring under 70□c, a frequency of 10 Hz, and a dynamic distortion factor of 1% by using a viscous-elasticity spectrometer manufactured by Iwamoto Manufacturing company.

Further, in the rubber strip T mentioned above, a thickness a is set between 0.3 and 1.5 mm, and preferably a width w is set between 15 and 35 mm. In the case that the width w is less than 15 mm or in the case that the thickness t is less than 0.5 mm, a lot of winding frequencies are necessary at a time of finishing a predetermined tread cross sectional shape, and a productivity is lowered. On the contrary, in the case that the width w becomes more than 35 mm or the thickness t becomes more than 1.5 mm, there is a tendency that it is hard to form a delicate cross sectional shape of the rubber member G.

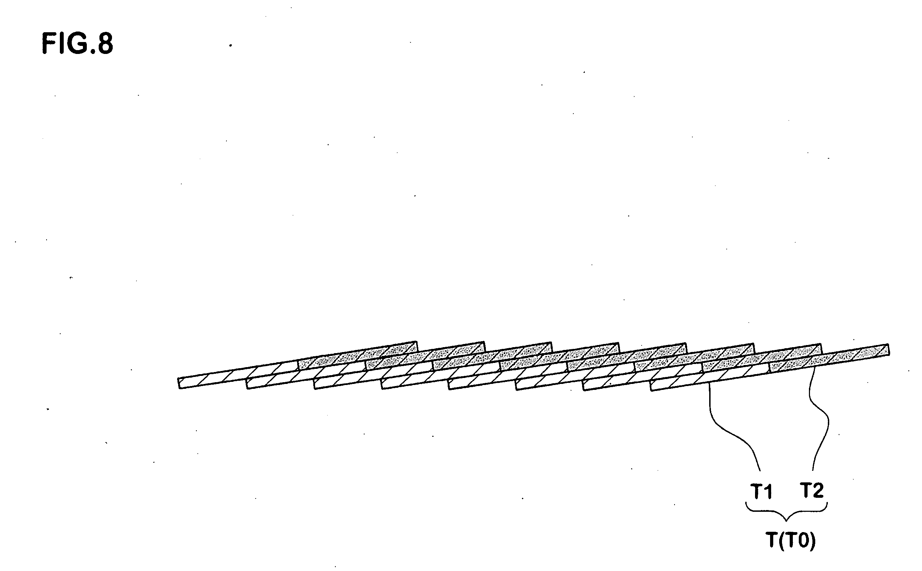

Fig. 8 shows the other embodiment in which the first rubber strip T1 and the second rubber strip T2 are formed as a wide composite integral rubber strip T0 in which the strip side edges are bonded to each other.

Accordingly, it is possible to reduce a head number (an applicator number) for winding and it is possible to form the rubber layers having the different materials in accordance with one winding. Accordingly, it is possible to achieve an adjustment of a tire performance, thereby serving for an improvement of productivity. Further, it is possible to do away with at least the generation of the air reservoir between the first rubber strip T1 and the second rubber strip T2. Besides, there is a limit in the thickness for being thinned at a time of extruding. It solves to connect previously the plurality of the rubber strips T in a width direction side by side. Accordingly, it becomes possible to thin and wide the rubber strip, thereby contributing to the thinning a gauge.

The first and second rubber layers 11 and 12 can be formed by the same rubber material. The side edge is connected during the extrusion, not to extrude the wide strip from one mouth piece. Accordingly, the rubber strip itself can be stabilized, and it is possible to improve the productivity by increasing the rubber quantity for one winding. The plurality of, such as three kinds of strips or the like rubber strips T are formed as the parallel strip side by side, or it is possible to overlap them in a radial direction.

The former 14 of the sidewall rubber G2 shown in Figs. 2 and 3 is formed in such a manner that the outer peripheral surface 14A stands in one side in an axial direction so as to be expandable in a disc shape. At this time, it is possible to employ a bladder or the like. The rubber strip T or the like which is wound around the cylindrical former 14 is expanded in the disk shape, at a time of expanding of the former 14, and forms the rubber member G corresponding to the sidewall rubber G2.

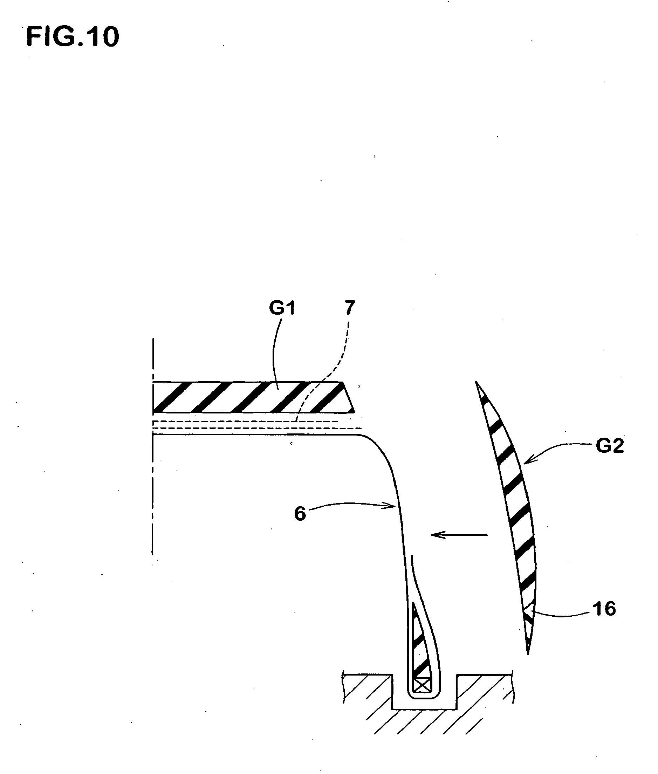

As exemplified in Fig. 10, it is attached to a side surface of the carcass 6 of the raw cover by using a manufacturing apparatus. The raw cover is expanded in a toroid shape, the belt layer 7, the tread rubber G1 and the like are arranged therein, and the raw cover is formed by attaching the disc-shaped rubber member G to the side surface of the carcass 6. Thereafter, the pneumatic tire can be manufactured by vulcanizing the raw cover. In this case, in the expanding aspect, preferably the sidewall rubber G2 is previously integrally formed with the clinch rubber 16 or the like on the other forming drum.

In this case, there is shown the case that the disc-shaped rubber strip T is attached to the side surface of the carcass 6 expanded and deformed in the toroid shape. It is possible to form by directly being wound spirally to the side surface of the carcass 6 around the tire shaft. In the case of the first and second rubber layers having the structure mentioned above, a structure wound in a multiplex manner or partly can be included in the present invention.

The description is given above of the embodiment in accordance with the present invention. The rubber strip is structured such as to have the other cross sectional shapes than the rectangular shape and various materials can be employed in correspondence to the performance demanded in the tire.

The rubber member G shown in Figs. 2, 3 and 4 to 7, which is in an approximately cylindrical shape, can be adapted as the tread rubber G1. At this time, the rubber member G can be structured such that the material is different between the first rubber strip T1 and the second rubber strip T2, the first rubber layer 11 can form the base rubber layer of the tread rubber G1, and the second rubber layer 12 can form the cap rubber layer of the tread rubber G2.

In addition, the rubber member in accordance with the present invention can be used for forming the inner liner rubber G3 arranged in the inner side of the carcass 6 and surrounding the tire inner cavity H, the clinch rubber G4, the breaker cushion rubber G5, the bead apex rubber or the like, as mentioned above.

Further, the present invention is particularly preferable for the pneumatic tire for the passenger car, however, it goes without saying that the present invention can be applied to various tires such as tires for a motor cycle, a truck, a bus and the like, in addition to the tire for the passenger car.

### Examples

There is manufactured a pneumatic radial tire for a passenger car on the basis of a tire size of 215/45ZR17 and a specification shown in Tables 1 and 2, and a test is executed about a performance thereof. In this case, a rubber strip C in Table 1 is constituted by a composition rubber strip, and a rubber strip D employs a rubber strip having a double thickness. The air remnant is searched by deconstructing the tire. The productivity is indicated by an indicator in which a comparative example product 2 is set to 100. The larger the index is, the better the productivity is.

**Table 1**

| Rubber strip | A | B | C | D |
|---|---|---|---|---|
| Cross sectional shape | Rectangular | Rectangular | Rectangular | Rectangular |
| Thickness mm | 0.75 | 0.75 | 0.75 | 1.5 |
| Width mm | 18 | 18 | 36 | 18 |
| Material JISA hardness E* | 70 | 62 | A + B (composition) | A (double thickness) |
| | 81 | 57 | | |

**Table 2**

| | Example 1 | | Example 2 | | Example 3 | Comparative Example 1 | | Comparative Example 2 |
|---|---|---|---|---|---|---|---|---|
| Rubber layer | First | second | First | second | - | First | second | - |
| Used rubber strip | A | A | A | B | C | A | A | D |
| spiral torsional direction | Same | | Same | | - | Different | | Different |
| Axial winding direction | Same | | Same | | - | Same | | Different |
| Difference of pitch between first and second rubber strips | 5% | | 0% | | - | - | | - |
| End surface alignment | without | | with | | - | - | | - |
| Air remnant | without | | without | | without | with | | with |
| Productivity | 90 | | 90 | | 100 | 90 | | 100 |

## Claims

1. A method for manufacturing a rubber member (G) for a tire (1) around an approximately cylindrical body (14),
said rubber member is constituted by a plurality of rubber layers including
a first rubber layer (11) and
a second rubber layer (12) on the radially outside of the first rubber layer (11),
the method comprising:
forming said first rubber layer (11) by spirally winding a first rubber strip (T1) with a first winding direction and a first torsional direction of a spiral; and
forming said second rubber layer (12) by spirally winding a second rubber strip (T2) with a second winding direction and a second torsional direction of a spiral which are the same as the first winding direction and the first torsional direction of a spiral and,
the forming of the first rubber layer (11) and the second rubber layer (12) being achieved,
by bonding one of the side edges (T1a) of the first rubber strip (T1) to one of the side edges (T2b) of the second rubber strip (T2) prior to the winding of the rubber strips (T1, T2) so as to form a wide strip (TØ) in which the first rubber strip (T1) and the second rubber strip (T2) are arranged side by side in their widthwise directions, wherein the first rubber strip (T1) is made of a material different from that of the second rubber strip (T2); and
by spirally winding said wide strip (TØ) so that said first and second rubber layers (11, 12) of the different materials are formed simultaneously; wherein
each of the first rubber strip (T1) and second rubber strip (T2) is a ribbon-shaped unvulcanized rubber strip which has a thickness and a width larger than the thickness, defining side edges (T1a, T2b) in the widthwise direction of the strip.

2. The method according to claim 1, wherein
said thickness is in a range of from 0.3 to 1.5 mm, and
said width is in a range of from 15 to 35 mm.

3. The method according to claim 1 or 2, wherein
said rubber member (G) is a sidewall rubber (G2) comprising an axially inner hard rubber layer having a JIS A hardness of from 65 to 75 and an axially outer soft rubber layer having a JIS A hardness of from 55 to 65, and
the axially inner hard rubber layer and the axially outer soft rubber layer are the first rubber layer (11) and the second rubber layer (12), respectively.

4. The method according to claim 1 or 2, wherein
said rubber member (G) is a tread rubber (G1) comprising a cap rubber layer and a base rubber layer, and
the base rubber layer and the cap rubber layer are the first rubber layer (11) and the second rubber layer (12), respectively.

## Patentansprüche

1. Verfahren zum Herstellen eines Kautschukelements (G) für einen Reifen (1) um einen annähernd zylindrischen Körper (14) herum,
wobei das Kautschukelement aus einer Vielzahl von Kautschukschichten gebildet wird, umfassend
eine erste Kautschukschicht (11), und
eine zweite Kautschukschicht (12) auf der radialen Außenseite der ersten Kautschukschicht (11),
wobei das Verfahren umfasst, dass:
die erste Kautschukschicht (11) gebildet wird, indem ein erster Kautschukstreifen (T1) mit einer ersten Wickelrichtung und einer ersten Torsionsrichtung einer Spirale spiralförmig gewickelt wird; und
die zweite Kautschukschicht (12) gebildet wird, indem ein zweiter Kautschukstreifen (T2) mit einer zweiten Wickelrichtung und einer zweiten Torsionsrichtung einer Spirale, die die gleichen sind wie die erste Wickelrichtung und die erste Torsionsrichtung einer Spirale, spiralförmig gewickelt wird, und
das Bilden der ersten Kautschukschicht (11) und der zweiten Kautschukschicht (12) erreicht wird, indem
eine der Seitenkanten (T1a) des ersten Kautschukstreifens (T1) mit einer der Seitenkanten (T2b) des zweiten Kautschukstreifens (T2) verbunden wird, bevor die Kautschukstreifen (T1, T2) gewickelt werden, um einen breiten Streifen (TØ) zu bilden, in welchem der erste Kautschukstreifen (T1) und der zweite Kautschukstreifen (T2) nebeneinander in Richtungen ihrer Breite angeordnet sind, wobei der erste Kautschukstreifen (T1) aus einem Material hergestellt wird, das sich von dem des zweiten Kautschukstreifens (T2) unterscheidet; und indem
der breite Streifen (TØ) spiralförmig gewickelt wird, sodass die erste und zweite Kautschukschicht (11, 12) aus den unterschiedlichen Materialien gleichzeitig gebildet werden; wobei
ein jeder von dem ersten Kautschukstreifen (T1) und dem zweiten Kautschukstreifen (T2) ein bandförmiger unvulkanisierter Kautschukstreifen ist, der eine Dicke und eine Breite, die größer als die Dicke ist, aufweist, wobei Seitenkanten (T1a, T2b) in der Richtung der Breite des Streifens definiert sind.

2. Verfahren nach Anspruch 1, wobei
die Dicke in einem Bereich von 0,3 bis 1,5 mm liegt, und
die Breite in einem Bereich von 15 bis 35 mm liegt.

3. Verfahren nach Anspruch 1 oder 2, wobei
das Kautschukelement (G) ein Seitenwandkautschuk (G2) ist, der eine axial innere harte Kautschukschicht mit einer JIS A-Härte von 65 bis 75 und eine axial äußere weiche Kautschukschicht mit einer JIS A-Härte von 55 bis 65 umfasst, und
die axial innere harte Kautschukschicht und die axial äußere weiche Kautschukschicht jeweils die erste Kautschukschicht (11) bzw. die zweite Kautschukschicht (12) werden.

4. Verfahren nach Anspruch 1 oder 2, wobei
das Kautschukelement (G) ein Laufflächenkautschuk (G1) wird, der eine Deckkautschukschicht und eine Basiskautschukschicht umfasst, und
die Basiskautschukschicht und die Deckkautschukschicht jeweils die erste Kautschukschicht (11) bzw. die zweite Kautschukschicht (12) sind.

## Revendications

1. Procédé pour fabriquer un élément en caoutchouc (G) pour un pneumatique (1) autour d'un corps approximativement cylindrique (14), ledit élément en caoutchouc est constitué par une pluralité de couches de caoutchouc incluant
une première couche de caoutchouc (11) et
une seconde couche de caoutchouc (12) radialement à l'extérieur sur la première couche de caoutchouc (11),
le procédé comprenant les étapes consistant à :
former ladite première couche de caoutchouc (11) en enroulant en spirale une première bande de caoutchouc (T1) avec une première direction d'enroulement et une première direction de torsion d'une spirale ; et
former ladite seconde couche de caoutchouc (12) en enroulant en spirale une seconde bande de caoutchouc (T2) avec une seconde direction d'enroulement et une seconde direction de torsion d'une spirale, qui sont les mêmes que la première direction d'enroulement et
la première direction de torsion d'une spirale, et
une fois achevé le formage de la première couche de caoutchouc (11) et de la seconde couche de caoutchouc (12),
coller l'un des bords latéraux (T1a) de la première bande de caoutchouc (T1) sur l'un des côtés latéraux (T2b) de la seconde bande de caoutchouc (T2) avant d'enrouler les bandes de caoutchouc (T1, T2) de manière à former une bande large (TO) dans lequel la première bande de caoutchouc (T1) et la seconde bande de caoutchouc (T2) sont agencées côte à côte dans leur direction dans le sens de la largeur, dans lequel la première bande de caoutchouc (T1) est réalisée d'un matériau différent de celui de la seconde bande de caoutchouc (T2) ; et
enrouler en spirale ladite bande large (TO) de telle façon que ladite première et ladite seconde couche de caoutchouc (11, 12) de matériaux différents sont formées simultanément ; dans lequel chacune de la première bande de caoutchouc (T1) et de la seconde bande de caoutchouc (T2) est une bande de caoutchouc non vulcanisée en forme de ruban qui possède une épaisseur et une largeur plus grande que l'épaisseur, ce qui définit des bords latéraux (T1a, T2b) dans la direction de la largeur de la bande.

2. Procédé selon la revendication 1, dans lequel
ladite épaisseur est dans une plage de 0,3 à 1,5 mm, et
ladite largeur est dans une plage de 15 à 35 mm.

3. Procédé selon la revendication 1 ou 2, dans lequel ledit élément de caoutchouc (G) est un caoutchouc formant paroi latérale (G2) comprenant une couche de caoutchouc dur axialement intérieure ayant une dureté JIS A de 65 à 75 et une couche de caoutchouc tendre axialement extérieure ayant une dureté JIS A de 55 à 65, et
la couche de caoutchouc dur axialement intérieure et la couche de caoutchouc tendre axialement extérieure sont respectivement la première couche de caoutchouc (11) et la seconde couche de caoutchouc (12).

4. Procédé selon la revendication 1 ou 2, dans lequel
ledit élément en caoutchouc (G) est un caoutchouc formant bande de roulement (G1) comprenant une couche de caoutchouc de sommet et une couche de caoutchouc de base, et
la couche de caoutchouc de base et la couche de caoutchouc de sommet sont respectivement la première couche de caoutchouc (11) et la seconde couche de caoutchouc (12).
